# EUROPÄISCHE PATENTSCHRIFT

(11) **EP 2 769 373 B1**
(45) Veröffentlichungstag und Bekanntmachung des Hinweises auf die Patenterteilung: **13.01.2016**
(21) Anmeldenummer: 12751507.0
(22) Anmeldetag: 28.08.2012
(51) Int. Cl.: G08G 1/16

(54) **ÜBERNAHME VON DATEN AUS BILDDATENBASIERENDEN KARTENDIENSTEN IN EIN ASSISTENZSYSTEM**
ACQUISITION OF DATA FROM IMAGE DATA-BASED MAP SERVICES BY AN ASSISTANCE SYSTEM
TRANSFERT DE DONNÉES DE SERVICES CARTOGRAPHIQUES À BASE DE DONNÉES D'IMAGES DANS UN SYSTÈME D'AIDE À LA CONDUITE

(30) Priorität: 21.10.2011 DE 102011084993
(43) Veröffentlichungstag der Anmeldung: 27.08.2014
(73) Patentinhaber: Robert Bosch GmbH, 70442 Stuttgart (DE)
(72) Erfinder: ZITZEWITZ, Henning Von, 31137 Hildesheim (DE); MUEHLMANN, Karsten, 70499 Stuttgart (DE); EGELHAAF, Jan, 71229 Leonberg (DE); PREISSLER, Peter, 36460 Dorndorf (DE); CANO, Raphael, 70180 Stuttgart (DE); VEPA, Leo, 89079 Ulm (DE); BECKER, Markus, 71732 Tamm (DE); LEHNER, Philipp, 74372 Sersheim (DE); SCHUMANN, Michael, 70597 Stuttgart (DE); NIEMZ, Volker, 71277 Rutesheim (DE); KANTER, Pascal, 71272 Renningen (DE)
(86) Internationale Anmeldenummer: PCT/EP2012/066639
(87) Internationale Veröffentlichungsnummer: WO 2013/056884

(56) Entgegenhaltungen:
- EP-A2- 1 283 406
- DE-A1-102009 018 073
- DE-A1-102009 037 835
- DE-A1-102010 034 140

## Beschreibung

### Stand der Technik

Die Erfindung bezieht sich auf ein Verfahren zur Übernahme von Daten aus bilddatenbasierenden Kartendiensten zur Verwendung in einem Assistenzsystem eines Fahrzeugs. Des Weiteren bezieht sich die Erfindung auf ein Computerprogramm-Produkt sowie auf eine Vorrichtung zur Durchführung des Verfahrens.

Im Automobilbereich werden verschiedene Assistenzsysteme eingesetzt, um den Fahrer beim Führen des Fahrzeugs zu unterstützen. Typische Einsatzbereiche für derartige Assistenzsysteme umfassen beispielsweise Navigationssysteme, die den Fahrer mit relevanten Informationen versorgen, um eine Zielführung zu ermöglichen. Weitere Assistenzsysteme unterstützen den Fahrer beim Einparken, beispielsweise durch die Vornahme von Lenkeingriffen oder durch die Anzeige geeigneter Lenkeinschläge. Weitere Assistenzsysteme stellen dem Fahrer eine visuelle Darstellung der Fahrzeugumgebung bereit, die mit Hilfe von am Fahrzeug angebrachten Kameras und/oder anderen Umfeldsensoren erfasst wird. Alle genannten Assistenzsysteme benötigen für ihre Funktion möglichst exakte Daten über die Umgebung des Fahrzeugs.

Aus der DE 10 2009 005 566 A1 ist ein Verfahren zur Erstellung einer Karte des Umfelds eines Fahrzeugs mittels einer Umfeldsensorik bekannt, wobei die Umfeldsensorik eine Ultraschallsensorik und mindestens ein bilderzeugendes Kamerasystem zur Detektion von Objekten in der Umgebung des Fahrzeugs aufweist. Messdaten der Ultraschallsensorik und die Messdaten des Kamerasystems werden in eine gemeinsame Karte eingetragen. Diese Kartendaten werden verwendet, um den Fahrer bei Parkvorgängen, Rangieren oder Fahren in engen Durchfahrten beziehungsweise enger Umgebung zu unterstützen.

DE 10 2009 037 835 A1 beschreibt ein Verfahren zur ergonomischen Darstellung von virtuellen Informationen in einer realen Umgebung. Die virtuellen Informationen werden auf einer Darstellungsvorrichtung in wenigstens einen Teil der Ansicht der realen Umgebung unter Berücksichtigung von Position und Orientierung eingeblendet. Der Realitätsgrad der Einblendung kann erhöht werden, indem die virtuellen Informationen durch Bilder der Umgebung (beispielsweise den Points of Interest) eingeblendet werden. Dabei kommen Umgebungskarten zum Einsatz, wobei die Informationen dynamisch, ortsbezogen zum Beispiel aus Google Street View extrahiert und berücksichtigt werden.

Aus der DE 102 48 534 A1 ist ein Verfahren zur genauen Positionsbestimmung eines mobilen Endgerätes bekannt. Das mobile Endgerät nimmt über eine optische Aufnahmevorrichtung Bilder oder Bildfolgen einer Umgebung auf, in der sich der Benutzer befindet. Die aufgenommenen Bilder oder Bildfolgen werden zusammen mit Positionsdaten sowie Daten zur Einstellung des mobilen Endgeräts und der zugeordneten Kamera an einen Positions- und Navigationsserver gesendet. Die dort eingegangenen Daten und Bilder oder Bildfolgen werden mit Bilder oder Bildfolgen einer Bilddatenbank, welche zu den Bildern exakte Vermessungsdaten enthält, verglichen. Aus dem Bildvergleich, bei dem aus der Videoüberwachung bekannte Algorithmen verwendet werden, wird die exakte Position des mobilen Endgeräts ermittelt und an dieses zurückgesendet.

DE 10 2009 018 073 A1 beschreibt ein Verfahren zum Aktualisieren einer geographischen Datenbank. Über von einem Navigationssystem gelieferte Informationen wird festgestellt, ob sich ein Fahrzeug auf einer Straße befindet. Daraufhin wird unter Verwendung einer im Fahrzeug montierten Kamera ein geographisch codiertes Bild erzeugt. Die Analyse des geographisch codierten Bildes umfasst ein Vergleich des Bildes mit gespeicherten fotorealistischen Bilddaten, um festzustellen, ob eine Aktualisierung der geographischen Datenbank erforderlich ist.

Ein gattungsgemäßes Verfahren ist aus der EP 1283406 A2 bekannt.

Bei den bekannten Assistenzsystemen mit Anbindung an eine Bilddatenbank beziehungsweise an einen bilddatenbasierenden Kartendienst wird die Anbindung genutzt, um die Darstellung der Umgebung mit Bildern aus einer Datenbank zu ergänzen, beziehungsweise einen Abgleich der Umfelddaten des Fahrzeugs durchzuführen. Die Informationen aus der Bilddatenbank beziehungsweise dem bilddatenbasierenden Kartendienst lassen sich bei den aus dem Stand der Technik bekannten Verfahren nicht für weitere Aufgaben der Assistenzsysteme, wie beispielsweise das Auffinden von Parklücken, nutzen.

### Offenbarung der Erfindung

Erfindungsgemäß wird ein Verfahren zur Übernahme von Daten aus einem bilddatenbasierenden Kartendienst zur Verwendung in einem Assistenzsystem eines Fahrzeugs mit folgenden Verfahrensschritten vorgeschlagen:
a. Ermitteln der Position des Fahrzeugs,
b. Abrufen von Bilddaten der Fahrzeugumgebung aus dem bilddatenbasierenden Kartendienst,
c. Extrahieren von Informationen aus den Bilddaten des Kartendienstes,
d. Übernahme der Informationen in das Assistenzsystem.

Im ersten Verfahrensschritt a) wird die Position und/oder die Ausrichtung des Fahrzeugs ermittelt. Hierzu kann jedes geeignete Verfahren oder auch eine Kombination aus mehreren Verfahren eingesetzt werden.

Ein geeignetes Verfahren zur Ermittlung der Fahrzeugposition ist die Nutzung eines funkgestützten und/oder satellitengestützten Navigationssystems, wie beispielsweise das Global-Positioning-System (GPS). Bewegt sich das Fahrzeug und wird die Fahrzeugposition fortlaufend über das Navigationssystem ermittelt, kann die Bewegungsrichtung des Fahrzeugs und damit die Ausrichtung ermittelt werden.

Ein weiteres geeignetes Verfahren zur Ermittlung der Fahrzeugposition verwendet den bilddatenbasierenden Kartendienst. Dazu erfolgt ein Abgleich von Kamerabildern der Umgebung des Fahrzeugs mit dem bilddatenbasierenden Kartendienst. Das Fahrzeug wird dazu mit einer oder mehreren Kameras, welche zumindest einen Ausschnitt der Umgebung des Fahrzeugs erfassen, ausgerüstet oder es werden bereits vorhandene Kameras benutzt. Die Anbindung an den bilddatenbasierenden Kartendienst wird über eine Datenbank realisiert. Die Datenbank ist beispielsweise auf einem maschinenlesbaren Speichermedium gespeichert, etwa auf einem permanenten oder wiederbeschreibbaren Speichermedium oder auf einer entfernbaren CD-ROM, DVD oder einem USB-Stick. Zusätzlich kann die Datenbank auf einer Computereinrichtung wie einem Server zum Herunterladen bereitgestellt werden, zum Beispiel über ein Datennetzwerk wie das Internet oder eine Kommunikationsverbindung wie etwa eine Telefonleitung oder eine drahtlose Verbindung. Der eigentliche Abgleich der Bilddaten des Kartendienstes mit den Kamerabildern erfolgt unter Verwendung von dem Fachmann bekannten Algorithmen und kann entweder in einem Steuergerät des Assistenzsystems, oder auf einer entfernten Computer-Einrichtung wie einem Server durchgeführt werden. Wird der Abgleich in dem Assistenzsystem durchgeführt, wird dem Assistenzsystem die Datenbank auf einem maschinenlesbaren Speichermedium bereitgestellt. Wird der Abgleich auf einem entfernten Server durchgeführt, wird dem Steuergerät eine Kommunikationsverbindung beigestellt und die Kamerabilder der Umgebung des Fahrzeugs werden über diese Kommunikationsverbindung auf den Server übertragen. Das Ergebnis des Abgleichs wird über dieselbe Kommunikationsverbindung an das Steuergerät zurück übermittelt.

Die in der Datenbank des bilddatenbasierenden Kartendienstes gespeicherten Bilder sind mit Informationen über den Ort der Aufnahme und der Ausrichtung versehen. Somit kann bei der Positionsbestimmung auch die Ausrichtung des Fahrzeugs ermittelt werden.

In einer bevorzugten Ausführungsform des Verfahrens wird zunächst die Fahrzeugposition grob mit Hilfe von GPS ermittelt und anschließend mit Hilfe der Bilddaten des Kartendienstes verfeinert. Durch die vorherige grobe Lokalisierung mit Hilfe von GPS kann bereits eine Vorauswahl der abzugleichenden Bilddaten erfolgen und der Aufwand für den Abgleich der Bilddaten wird erheblich vermindert.

Die Ausrichtung des Fahrzeugs kann auch über Sensorik, wie beispielsweise einen Kompass, ermittelt werden.

Im zweiten Verfahrensschritt b) werden Bilddaten der Fahrzeugumgebung aus dem bilddatenbasierenden Kartendienst abgerufen. Da Position und Ausrichtung des Fahrzeugs bekannt sind, lassen sich die abgerufenen Bilddaten in eine Karte der Umgebung des Fahrzeugs einordnen. Beispiele für bilddatendatierende Kartendienste sind die unter dem Namen Google Street View, Google maps und Google earth angebotenen Dienste. Ebenfalls denkbar ist es, Daten aus mehreren bilddatenbasierenden Kartendiensten abzurufen.

Erfindungsgemäß werden die aus dem Kartendienst abgerufenen Bilddaten durch Kamerabilder der Fahrzeugumgebung ergänzt. Das Fahrzeug ist dazu mit einer oder mehreren Kameras ausgestattet, beispielsweise einer Frontkamera, einer Heckkamera und jeweils einer Seitenkamera. Dabei kann auch auf für z. B. Rückfahrassistenten bereits vorhandene Kameras zurückgegriffen werden.

Erfindungsgemäß werden die Bilddaten des Kartendienstes, die gegebenenfalls bereits durch Kamerabilder der Fahrzeugumgebung ergänzt wurden, mit durch Umfeldsensoren erfassten Umgebungsdaten ergänzt. Geeignete Umfeldsensoren am Fahrzeug sind beispielsweise Ultraschallsensoren, LIDAR-Sensoren oder Radarsensoren, wie sie üblicherweise zur Messung von Abständen und zur Detektion von Objekten im Umfeld eines Fahrzeugs eingesetzt werden.

Im dritten Schritt c) des erfindungsgemäßen Verfahrens werden aus den Bilddaten des Kartendienstes, die gegebenenfalls mit Kamerabildern und/oder Umgebungsdaten ergänzt wurden, Informationen extrahiert. Mit Hilfe von dem Fachmann bekannten Algorithmen zur Bildverarbeitung und Objekterkennung werden erfindungsgemäß Parkplätze in der Umgebung des Fahrzeugs sowie gegebenenfalls deren Größe und Ausrichtung ermittelt.

Zusätzlich oder alternativ können auch weitere Informationen extrahiert werden. In den gegebenenfalls mit Kamerabildern ergänzten Bilddaten des bilddatenbasierenden Kartendienstes werden in einer Ausführungsform des Verfahrens Verkehrsschilder identifiziert. Beispielsweise lassen sich aus Schildern, betreffend Halte- und Parkverbote, Bereiche in der Umgebung des Fahrzeugs identifizieren, die als Parkplatz ungeeignet sind. In einer weiteren Ausführungsform der Erfindung kann zusätzlich oder alternativ aus den mit Kamerabildern und gegebenenfalls Umfelddaten ergänzten Bilddaten des bilddatenbasierenden Kartendienstes die Lage und Größe von Hindernissen, insbesondere von Bäumen, die Lage und Höhe des Bordsteins und/oder die Verkehrsführung, insbesondere die Art und Lage von Kreuzungen ermittelt und ausgewertet werden. Sind Kamerabilder verfügbar, kann zusätzlich durch eine Auswertung einer Abfolge von Kamerabildern zwischen beweglichen Objekten und statischen Objekten unterschieden werden.

In einer Ausführungsform der Erfindung werden die Bilddaten des bilddatenbasierenden Kartendienstes aktualisiert, wenn beim Abgleichen der Bilddaten mit den Kamerabildern und/oder mit den mit Hilfe der Umfeldsensoren erfassten Umgebungsdaten Veränderungen erkannt werden.

In einer Ausführungsform des Verfahrens werden die Bilddaten des bilddatenbasierenden Kartendienstes nur dann aktualisiert, wenn die durch den Abgleich der Bilddaten erkannte Veränderung mehrmals, bevorzugt mindestens drei mal, erkannt wurde. Dabei muss jede Erkennung einer Veränderung unabhängig voneinander sein, das heißt beispielsweise durch zwei voneinander unabhängige Sensorsysteme oder bei zwei verschiedenen Vorbeifahrten des Fahrzeugs erkannt werden.

Im letzten Schritt d) des Verfahrens werden die Informationen, die aus den gegebenenfalls ergänzten Bilddaten des bilddatenbasierenden Kartensystems extrahiert worden sind, in das Assistenzsystem übernommen. Das Assistenzsystem kann beispielsweise als Navigationssystem und/oder als ParkAssistenzsystem ausgeführt sein. In einer Ausführungsform des Verfahrens werden aus den Bilddaten des Kartendienstes, die gegebenenfalls durch Kamerabilder und Umgebungsdaten ergänzt wurden, sowie aus diesen gewonnenen Informationen ein Bild erstellt. Dieses Bild wird dem Fahrer über ein geeignetes Anzeigemittel dargestellt, wobei die Bilddarstellung bevorzugt als Bird's-Eye-View oder als 3D Ansicht ausgeführt ist. Bei der Darstellung als Bird's-Eye-View wird dem Fahrer die Umgebung des Fahrzeugs aus einer erhöhten Position dargestellt, so dass sich eine übersichtliche und einfache, verständliche Darstellung ergibt. Bevorzugt enthält die Bilddarstellung Informationen über mögliche Parklücken in der Umgebung des Fahrzeugs. Da das Assistenzsystem über Informationen zur Lage, Ausrichtung und Größe der Parklücke sowie über in der Umgebung des Fahrzeugs befindliche Hindernisse verfügt, lässt sich ein durch das Assistenzsystem geführtes Einparkmanöver leicht realisieren.

In einer Ausführungsform des Verfahrens ist die Bilddarstellung so ausgeführt, dass sie vergrößert oder verkleinert werden kann. Dabei ist es bevorzugt, dass bei einer Verkleinerung der Bilddarstellung ein nahtloser Übergang auf eine ausschließlich aus Bilddaten des Kartendienstes erzeugte Bilddarstellung erfolgt.

Die extrahierten Informationen lassen sich auch für weitere Assistenzsysteme nutzen. Ein Navigationssystem kann beispielsweise Informationen über kommende Fahrspuren nutzen, um dem Fahrer präzisiere Fahrhinweise zu geben. Die Informationen lassen sich auch in eingreifenden Assistenzsystemen, welche den Fahrer beispielsweise auf Geschwindigkeitsbegrenzungen, Zebrastreifen und ähnliches hinweisen, nutzen. Ebenso denkbar ist die Nutzung der extrahierten Informationen für Systeme, die ein vollautonomes Fahren erlauben.

Erfindungsgemäß wird weiterhin ein Computerprogramm zur Durchführung eines der hierin beschriebenen Verfahren vorgeschlagen, wenn das Computerprogramm auf einer programmierbaren Computereinrichtung ausgeführt wird. Bei der Computereinrichtung kann es sich beispielsweise um ein Modul oder ein Steuergerät zur Implementierung einzelner Assistenzsysteme oder eines Subsystems hiervon in ein Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung, oder auf einer entfernbaren CD-ROM, DVD oder einem USB-Stick. Zusätzlich oder alternativ kann das Computerprogramm auf einer Computereinrichtung wie einem Server zum Herunterladen bereitgestellt werden, zum Beispiel über ein Datennetzwerk wie das Internet oder eine Kommunikationsverbindung entweder eine Telefonleitung oder eine drahtlose Verbindung.

Erfindungsgemäß wird weiterhin eine Vorrichtung vorgeschlagen, welche zur Durchführung des vorstehend beschriebenen Verfahrens eingerichtet ist. Die Vorrichtung umfasst ein Steuergerät, mindestens eine Kamera und gegebenenfalls weitere Umfeldsensoren beispielsweise Ultraschallsensoren, LIDAR-Sensoren oder Radarsensoren, zum Erfassen der Umgebung des Fahrzeugs, wobei das Steuergerät über eine Anbindung an einen bilddatenbasierenden Kartendienst verfügt. Des Weiteren kann die Vorrichtung weitere Sensoren, wie beispielsweise ein Infrarotsensorsystem oder ein Positionssensor, wie einen GPS-Sensor, umfassen. Ist bei dem Verfahren eine Bilddarstellung für den Fahrer vorgesehen, umfasst die Vorrichtung des Weiteren ein Mittel zur Anzeige von Bildinformationen, wie beispielsweise einen Flachbildschirm.

### Vorteile der Erfindung

Die Erfindung ermöglicht das Extrahieren von Informationen aus den Bilddaten eines bilddatenbasierenden Kartendienstes, um diese in einem Assistenzsystem eines Fahrzeugs zu nutzen. Assistenzsysteme, wie beispielsweise Einparkhilfen erhalten auf diese Weise auch Informationen über die Umgebung des Fahrzeugs, die gerade nicht im Sichtfeld der Sensoren des Fahrzeugs liegt und somit momentan nicht einsehbar sind. Die Assistenzsysteme können dadurch genauer planen und den Fahrer früher auf mögliche Gefahren aufmerksam machen. Eine durch das erfindungsgemäße Assistenzsystem implementierte Einparkhilfe kann dies beispielsweise nutzen, um den Fahrer vor einer Vorbeifahrt über mögliche Parkplätze zu informieren und kann dem Fahrer auch mögliche Parkplätze anbieten, die momentan nicht im Sichtfeld des Fahrzeugs liegen. Da mit Hilfe der Bilddaten auch eine Bestimmung der Ausrichtung einer Parklücke möglich ist, wird der Nutzer einer Einparkhilfe entlastet, da dieser die korrekte Ausrichtung der Parklücke nicht von Hand in das Assistenzsystem eingeben muss.

### Kurze Beschreibung der Zeichnungen

- Figur 1: stellt schematisch den Ablauf des erfindungsgemäßen Verfahrens dar,
- Figur 2: zeigt die in einem Fahrzeug installierte erfindungsgemäße Vorrichtung mit mehreren Kameras und Umfeldsensoren,
- Figur 3: stellt die Umfelderfassung mit Hilfe der erfindungsgemäßen Vorrichtung dar.

### Ausführungsformen der Erfindung

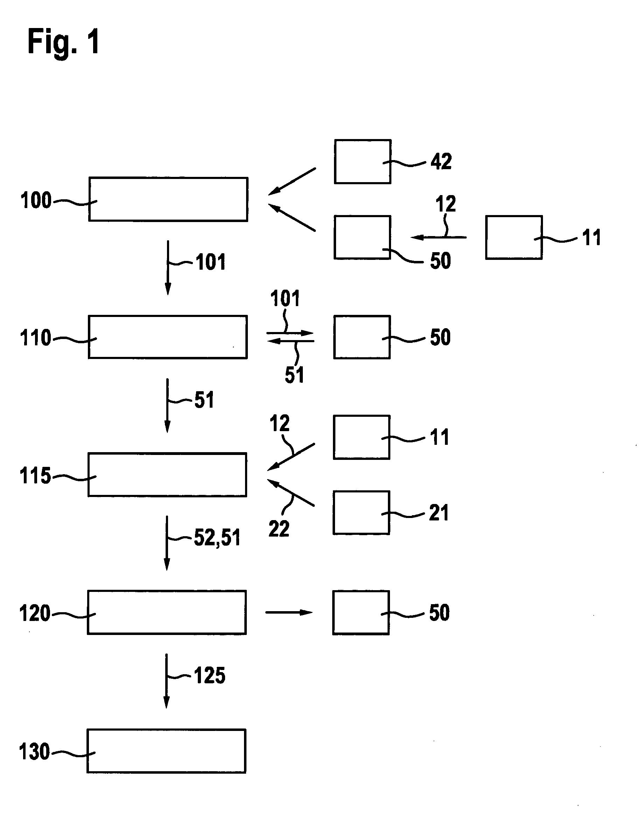

In Figur 1 ist schematisch der Ablauf des erfindungsgemäßen Verfahrens dargestellt. Im ersten Schritt 100 des Verfahrens wird die Position des Fahrzeugs ermittelt. Dazu werden je nach Verfügbarkeit die Daten eines funk- oder satellitengestützten Navigationssystems 42 und/oder Daten eines bilddatenbasierenden Kartendienstes 50 verwendet. Für die Positionsbestimmung mit Hilfe des bilddatenbasierenden Kartendienstes 50 werden die Kamerabilder 12 mit einer oder mehreren Kameras 11 erfasst und mit dem bilddatenbasierenden Kartendienstes 50 abgeglichen. Die im bilddatenbasierenden Kartendienst 50 gespeicherten Bilder sind für eine Positionsbestimmung mit Daten über die Ausrichtung und den Aufnahmeort versehen. Wird beim Abgleich in dem Kartendienst 50 ein zu den Kamerabildern 12 passendes Bild im Kartendienst 50 gefunden, ist die Position und Ausrichtung des Fahrzeugs bekannt. Über ein funk- oder satellitengestütztes Navigationssystem kann die Position des Fahrzeugs ebenfalls bestimmt werden. Ist das Fahrzeug in Bewegung und werden fortlaufend über das Navigationssystem 42 Positionsdaten ermittelt, kann die Bewegungsrichtung des Fahrzeugs festgestellt werden und damit ebenfalls auf die Ausrichtung des Fahrzeugs geschlossen werden. In weiteren Ausführungsformen des Verfahrens kann zur Bestimmung der Position und Ausrichtung des Fahrzeugs auf weitere Sensoren zurückgegriffen werden, wie beispielsweise einem digitalen Kompass.

Die im ersten Verfahrensschritt 100 ermittelten Positions- und Ausrichtungsdaten 101 des Fahrzeugs werden im zweiten Verfahrensschritt 110 verwendet, um Bilddaten 51 der Fahrzeugumgebung aus dem bilddatenbasierenden Kartendienst 50 abzurufen.

Gegebenenfalls werden die aus dem Kartendienst 50 abgerufenen Bilddaten 51 in einem Zwischenschritt 115 mit weiteren Daten ergänzt. Je nach Ausführungsform des Verfahrens und Ausstattung des Fahrzeugs werden Kamerabilder 12 von am Fahrzeug montierten Kameras 11 zur Ergänzung der Bilddaten 51 verwendet. Ist das Fahrzeug mit Umfeldsensoren 21, beispielsweise Ultraschallsensoren, LIDAR-Sensoren oder Radarsensoren, ausgestattet, können die damit erfassten Umgebungsdaten 22 ebenfalls zur Ergänzung der Bilddaten 51 verwendet werden.

Im dritten Verfahrensschritt 120 werden aus den Bilddaten 51 beziehungsweise aus den mit Kamerabildern 12 und/oder Umgebungsdaten 22 ergänzten Bilddaten 52 Informationen 125 extrahiert. Dazu werden dem Fachmann bekannte Algorithmen zur Bildverarbeitung und Objekterkennung eingesetzt. Aus den Bilddaten 51 beziehungsweise den ergänzten Bilddaten 52 werden insbesondere Informationen über Verkehrsschilder, die Lage von Hindernissen, die Lage und Höhe des Bordsteins, die Verkehrsführung sowie die Lage und Ausrichtung von Parkplätzen in der Umgebung des Fahrzeugs extrahiert.

Im letzten Verfahrensschritt 130 werden die extrahierten Informationen 125 in das Assistenzsystem übernommen. In einer Ausführung des Verfahrens werden aus den Bilddaten 51 des Kartendienstes 50 und gegebenenfalls aus den Kamerabildern 12 und den Umgebungsdaten 22 sowie aus diesen gewonnenen Informationen ein Bild erstellt, welches dem Fahrer dargestellt wird. Dabei ist bevorzugt, die Bilddarstellung als Bird's-Eye-View auszuführen, bei der die Umgebung dem Fahrer aus einer erhöhten Perspektive dargestellt wird. In einer bevorzugten Ausführungsform enthält die Darstellung Informationen über mögliche Parklücken in der Umgebung des Fahrzeugs. Die Informationen über mögliche Parklücken, die Verkehrsführung und Hindernisse im Umfeld des Fahrzeugs können durch das Assistenzsystem, beispielsweise für ein unterstütztes Einpark- oder Ausparkmanöver verwendet werden.

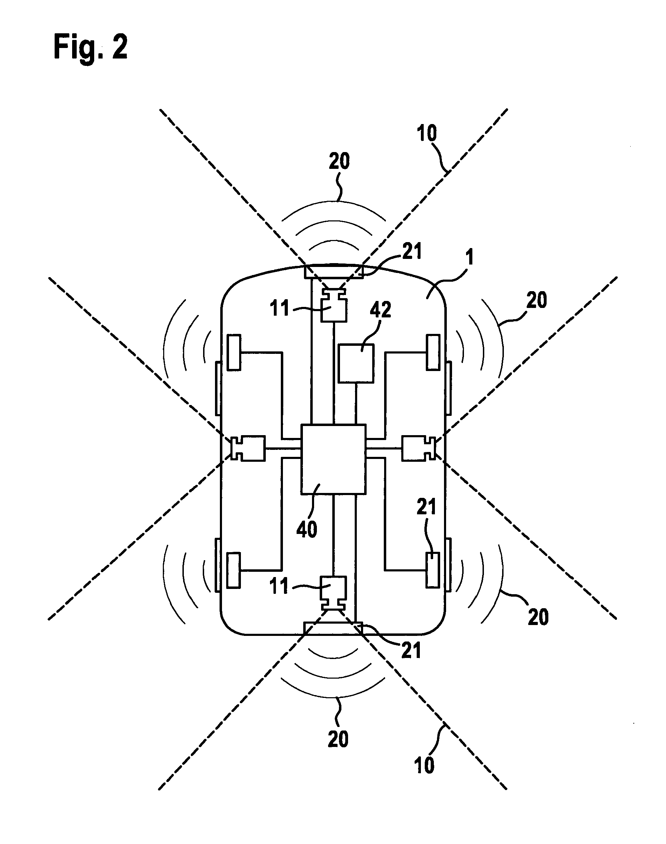

In Figur 2 ist ein Fahrzeug mit der erfindungsgemäßen Vorrichtung dargestellt. Das Fahrzeug 1 ist mit mehreren Kameras 11 ausgerüstet deren Sichtfelder 10 das Umfeld des Fahrzeugs 1 zumindest teilweise abdecken. In der in Figur 2 dargestellten Ausführungsform umfasst das Fahrzeug 1 eine Frontkamera, eine Heckkamera und jeweils eine Seitenkamera.

Die Kameras 11 des Fahrzeugs 1 sind mit einem Steuergerät 40 verbunden. Das Fahrzeug 1 weist des Weiteren mehrere Umfeldsensoren 21 auf, die ebenfalls mit dem Steuergerät 40 verbunden sind. In der in Figur 2 dargestellten Ausführungsform weist das Fahrzeug 1 Umfeldsensoren 21 in der Front und im Heck sowie jeweils zwei Umfeldsensoren an der Seite auf. Die Umfeldsensoren 21 sind hier als Ultraschallsensoren ausgeführt. Durch die Ultraschallsensoren kann das Steuergerät 40 die genaue Lage von Hindernissen in der näheren Umgebung des Fahrzeugs 1 erfassen. Der Erfassungsbereich der Ultraschallsensoren ist jeweils mit dem Bezugszeichen 20 angedeutet. Die Sichtfelder der Kameras 11 sind mit dem Bezugszeichen 10 versehen. In der in Figur 2 dargestellten Ausführungsform ist ein GPS-Empfänger 42 zur Ermittlung der Fahrzeugposition dem Steuergerät 40 beigestellt. In dem Steuergerät 40 sind unter Anderem eine Computereinrichtung und eine Anbindung an einen bilddatenbasierenden Kartendienst enthalten.

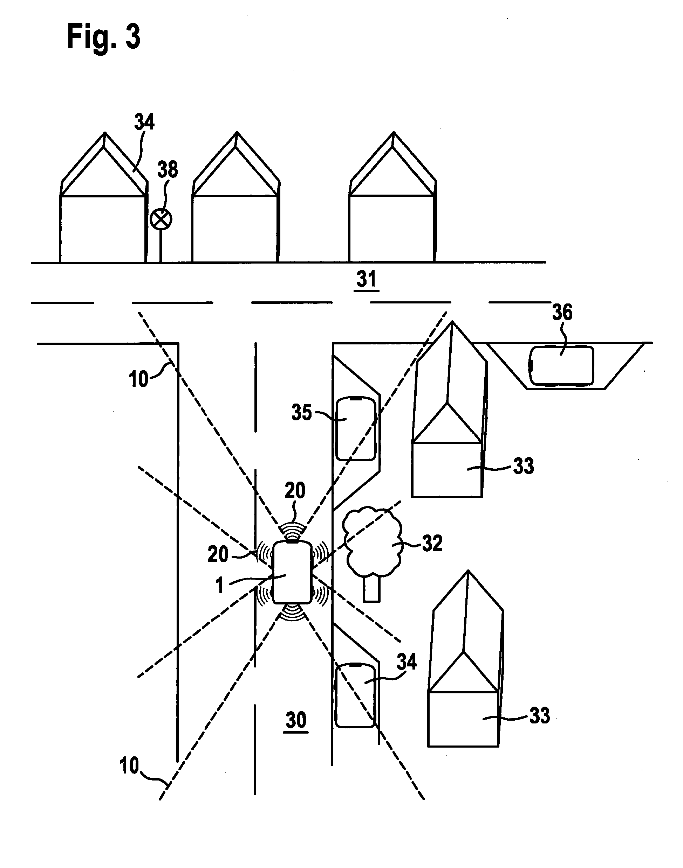

In Figur 3 wird ein Bild der Umgebung des Fahrzeugs dargestellt, welches aus Bilddaten des Kartendienstes, Kamerabildern und Umgebungsdaten gewonnen wurde. In der dargestellten Situation fährt das Fahrzeug 1 auf einer Straße 30 in Richtung einer Kreuzung 31. Die Sichtfelder 10, 20, der verschiedenen Kameras und Umfeldsensoren des Fahrzeugs 1 sind in dem Bild angedeutet. Aus den angedeuteten Sichffeldern geht hervor, dass durch die im Fahrzeug integrierten Sensoren und Kameras die Parkplätze 34 und 35 sowie der Baum 32 direkt zu sehen sind. Die Häuser 33 sind teilweise durch den Baum 32 verdeckt. Die Häuser 33 wiederum verdecken die Sicht auf den Parkplatz 36. Die Häuser 34 und das Verkehrsschild 38 sind zwar nicht verdeckt, die Entfernung zum Verkehrsschild 38 ist jedoch zu groß, um nur aus einem Kamerabild eine Erkennung des Schildes durchzuführen.

Um dem Fahrer eine vollständige Darstellung der Umgebung zu präsentieren, wird zunächst die Position des Fahrzeugs 1 ermittelt. Im nächsten Schritt werden Bilddaten der Fahrzeugumgebung aus dem bilddatenbasierenden Kartendienst abgerufen. Diese Bilddaten werden in einem Zwischenschritt mit Kamerabildern der Fahrzeugkameras 11 und den Umfelddaten des Fahrzeugs 1 ergänzt. Im dritten Schritt des Verfahrens werden aus den Bilddaten des Kartendienstes Informationen extrahiert, die im letzten Schritt des Verfahrens in das Assistenzsystem übernommen werden. In dem gezeigten Beispiel wurde das Verkehrsschild 38 aufgrund der Bilddaten als Halteverbotsschild erkannt und der Parkplatz 36 identifiziert, der sich nicht im Sichtfeld des Fahrzeugs 1 befindet. Zudem wurden von den Parkplätzen 34, 35 und 36 die Ausrichtungen und deren genaue Lage ermittelt.

Die extrahierten Informationen werden zusammen mit den Bilddaten des Kartendienstes, den Kamerabildern und den Umgebungsdaten zu einer gemeinsamen Bilddarstellung verschmolzen, die dem Fahrer aus einer erhöhten Perspektive präsentiert wird. Auf diese Weise erhält der Fahrer des Fahrzeugs 1 auf einen Blick alle relevanten Informationen über die Umgebung. Zudem stehen alle benötigten Daten zur Verfügung, um auf Wunsch des Fahrers ein geführtes Einparkmanöver zu beginnen.

In einer Ausführungsform der Erfindung ist die Bilddarstellung des Fahrzeugs so ausgeführt, dass diese auf Wunsch des Fahrers vergrößert oder verkleinert werden kann.

Durch das Verkleinern der Bilddarstellung wird ein größerer Bereich der Umgebung des Fahrzeugs 1 sichtbar und der Überblick des Fahrers wird verbessert. Bereiche der Bilddarstellung, die außerhalb des Sichtbereiches der Fahrzeugkameras 11 beziehungsweise den Umfeldsensoren 21 liegen, werden durch Bilder aus dem bilddatenbasierenden Kartendienst ergänzt. Bevorzugt wird diese Ergänzung so vorgenommen, dass ein nahtloser Übergang der verschiedenen Bilder entsteht und die Vergrößerung der Bilddarstellung stufenlos einstellbar ist.

Bei starker Verkleinerung der Bilddarstellung ist es denkbar, die Bilddarstellung ausschließlich auf Basis der Bilddaten des Kartendienstes zu erzeugen. Bevorzugt findet der Übergang zwischen den verschiedenen Darstellungen ebenfalls nahtlos statt.

Die Erfindung ist nicht auf die hier beschriebenen Ausführungsbeispiele und die darin hervorgehobenen Aspekte beschränkt. Vielmehr ist innerhalb des durch die anhängenden Ansprüche angegebenen Bereichs eine Vielzahl von Abwandlungen möglich, die im Rahmen fachmännischen Handelns liegen.

## Patentansprüche

1. Verfahren zur Übernahme von Daten (125) aus einem bilddatenbasierenden Kartendienst (50) zur Verwendung in einem Assistenzsystem eines Fahrzeugs (1) umfassend folgende Verfahrensschritte:
a. Ermitteln der Position und/oder Ausrichtung des Fahrzeugs (1),
b. Abrufen von Bilddaten (51) der Fahrzeugumgebung aus dem bilddatenbasierenden Kartendienst (50),
c. Extrahieren von Informationen (125) aus den Bilddaten (51) des Kartendienstes (50),
d. Übernahme der Informationen (125) in das Assistenzsystem
**dadurch gekennzeichnet, dass** die Bilddaten (51) des Kartendienstes (50) durch Kamerabilder (12) der Fahrzeugumgebung und durch mit Umfeldsensoren (21) erfassten Umgebungsdaten ergänzt werden, wobei im Schritt c) des Verfahrens aus den Bilddaten (51) des bilddatenbasierenden Kartendienstes (50), aus den Kamerabildern (12) und aus den Umgebungsdaten (22) Parkplätze (35, 36, 37) in der Umgebung des Fahrzeugs (1) und/oder deren Ausrichtung ermittelt werden.

2. Verfahren nach Anspruch 1, **dadurch gekennzeichnet, dass** das Assistenzsystem ein Navigationssystem oder ein Einparkassistent ist, wobei die extrahierten Informationen (125) zur Führung des Fahrzeugs (1) verwendet werden.

3. Verfahren nach Anspruch 1 oder 2, **dadurch gekennzeichnet, dass** Verkehrsschilder (38), insbesondere Schilder betreffend Halte- und Parkverbote, die Lage von Hindernissen, insbesondere von Bäumen (32), die Lage und Höhe des Bordsteins und/oder die Verkehrsführung, insbesondere die Art und Lage von Kreuzungen (31), in den Bilddaten (51) des Kartendienstes (50) und gegebenenfalls in den Kamerabildern (12) und/oder den Umgebungsdaten (22) ermittelt und ausgewertet werden.

4. Verfahren nach einem der Ansprüche 1 bis 3, **dadurch gekennzeichnet, dass** bei der Ermittlung der Fahrzeugposition ein Abgleich von Kamerabildern (12) der Umgebung des Fahrzeugs (1) mit dem bilddatenbasierenden Kartendienst (50) durchgeführt wird.

5. Verfahren nach einem der Ansprüche 1 bis 4, **dadurch gekennzeichnet, dass** bei der Ermittlung der Fahrzeugposition Daten eines funkgestützten und/oder satellitengestützten Navigationssystems (42) berücksichtigt werden.

6. Verfahren nach einem der Ansprüche 1 bis 5, **dadurch gekennzeichnet, dass** die Fahrzeugposition sowie die Kamerabilder (12) und/oder die Umgebungsdaten (22) mit den Bilddaten (51) des Kartendienstes (50) abgeglichen werden und bei erkannten Veränderungen die Bilddaten des Kartendienstes (50) aktualisiert werden.

7. Verfahren nach Anspruch 6, **dadurch gekennzeichnet, dass** die Bilddaten (51) des Kartendienstes (50) nur dann aktualisiert werden, wenn die durch Abgleich erkannte Veränderung mindestens zweimal erkannt wurde.

8. Verfahren nach einem der Ansprüche 1 bis 7, **dadurch gekennzeichnet, dass** aus den Bilddaten (51) des Kartendienstes (50) und gegebenenfalls den Kamerabildern (12) und den Umgebungsdaten (22) sowie aus diesen gewonnenen Informationen ein Bild erstellt wird, welches dem Fahrer dargestellt wird, wobei die Bilddarstellung bevorzugt als Bird's-Eye-View oder 3D Ansicht ausgeführt ist und die Darstellung bevorzugt Informationen über mögliche Parklücken (35, 36, 37) in der Umgebung des Fahrzeugs (1) enthält.

9. Verfahren nach Anspruch 8, **dadurch gekennzeichnet, dass** die Bilddarstellung vergrößerbar und verkleinerbar ausgeführt ist, und dass bei Verkleinerung der Bilddarstellung ein nahtloser Übergang auf eine ausschließlich aus Bilddaten (51) des Kartendienstes (50) erzeugte Darstellung erfolgt.

10. Computerprogramm zur Durchführung des Verfahrens nach einem der Ansprüche 1 bis 9, wenn das Computerprogramm auf einer programmierbaren Computereinrichtung ausgeführt wird.

11. Vorrichtung eingerichtet zur Durchführung des Verfahrens nach einem der Ansprüche 1 bis 9, umfassend ein Steuergerät (40), mindestens eine Kamera (11) und gegebenenfalls weitere Umfeldsensoren (21), beispielsweise einen Ultraschallsensor, Lidarsensor oder Radarsensor, zum Erfassen der Umgebung des Fahrzeugs (1), wobei das Steuergerät (40) über eine Anbindung an einen bilddatenbasierenden Kartendienst (50) verfügt.

## Claims

1. Method for transferring data (125) from an image-data-based map service (50) for use in an assistance system of a vehicle (1), comprising the following method steps:
a. ascertainment of the position and/or orientation of the vehicle (1),
b. retrieval of image data (51) for the vehicle surroundings from the image-data-based map service (50),
c. extraction of information (125) from the image data (51) of the map service (50),
d. transfer of the information (125) to the assistance system,
**characterized in that** the image data (51) of the map service (50) are completed by camera images (12) of the vehicle surroundings and by surroundings data captured using ambient sensors (21), wherein step c) of the method involves the image data (51) of the image-data-based map service (50), the camera images (12) and the surroundings data (22) being used to ascertain parking spaces (35, 36, 37) in the surroundings of the vehicle (1) and/or the orientation of said parking spaces.

2. Method according to Claim 1, **characterized in that** the assistance system is a navigation system or a parking assistant, wherein the extracted information (125) is used for guiding the vehicle (1).

3. Method according to Claim 1 or 2, **characterized in that** road signs (38), particularly signs relating to stopping and parking restrictions, the position of obstacles, particularly of trees (32), the position and height of the kerb and/or the traffic guidance, particularly the type and position of junctions (31), are ascertained in the image data (51) of the map service (50) and possibly in the camera images (12) and/or the surroundings data (22) and evaluated.

4. Method according to one of Claims 1 to 3, **characterized in that** the ascertainment of the vehicle position involves camera images (12) of the surroundings of the vehicle (1) being matched against the image-data-based map service (50).

5. Method according to one of Claims 1 to 4, **characterized in that** the ascertainment of the vehicle position involves data of a radio-assisted and/or satellite-assisted navigation system (42) being taken into account.

6. Method according to one of Claims 1 to 5, **characterized in that** the vehicle position and also the camera images (12) and/or the surroundings data (22) are matched against the image data (51) of the map service (50) and, in the event of alterations being identified, the image data of the map service (50) are updated.

7. Method according to Claim 6, **characterized in that** the image data (51) of the map service (50) are updated only when the alteration identified through matching has been identified at least twice.

8. Method according to one of Claims 1 to 7, **characterized in that** the image data (51) of the map service (50) and possibly the camera images (12) and the surroundings data (22) and also information obtained therefrom are used to produce an image that is presented to the driver, wherein the image presentation is preferably embodied as a bird's-eye view or 3D view and the presentation preferably contains information about possible parking spaces (35, 36, 37) in the surroundings of the vehicle (1).

9. Method according to Claim 8, **characterized in that** the image presentation is embodied so as to be enlargeable and reducible and **in that**, when the image presentation is reduced, there is a seamless transition to a presentation produced exclusively from image data (51) of the map service (50).

10. Computer program for performing the method according to one of Claims 1 to 9 when the computer program is executed on a programmable computer device.

11. Apparatus set up to perform the method according to one of Claims 1 to 9, comprising a controller (40), at least one camera (11) and possibly further ambient sensors (21), for example an ultrasonic sensor, lidar sensor or radar sensor, for sensing the surroundings of the vehicle (1), wherein the controller (40) has a connection to an image-data-based map service (50).

## Revendications

1. Procédé de transfert de données (125) depuis un service de carte (50) basé sur données d'image, le procédé étant destiné à être utilisé dans un système d'assistance d'un véhicule (1) et comportant les étapes suivantes :
a. détermination de la position et/ou de l'orientation du véhicule (1),
b. demande de données d'image (51) de l'environnement du véhicule au service de carte (50) basé sur données d'image,
c. extraction d'informations (125) dans les données d'image (51) du service de carte (50) et
d. transfert des informations (125) au système d'assistance,
**caractérisé en ce que**
les données d'image (51) du service de carte (50) sont complétées par des images de caméra (12) de l'environnement du véhicule et par des données d'environnement saisies par des capteurs d'environnement (21),
**en ce qu'**à l'étape c) du procédé, des emplacements de stationnement (35, 36, 37) présents dans l'environnement du véhicule (1) et/ou dans sa direction sont déterminés à partir des données d'image (51) du service de carte (50) basé sur données d'image, des images de caméra (12) et des données d'environnement (22).

2. Procédé selon la revendication 1, **caractérisé en ce que** le système d'assistance est un système de navigation ou un système d'assistance au stationnement, les informations (125) extraites étant utilisées pour guider le véhicule (1).

3. Procédé selon les revendications 1 ou 2, **caractérisé en ce que** des panneaux de circulation (38), en particulier des panneaux concernant des interdictions d'arrêt et de stationnement, la position d'obstacles, en particulier d'arbres (32), la position et la hauteur de la bordure de trottoir et/ou des guides de trafic, en particulier la nature et la position de croisements (31) sont déterminés et évalués dans les données d'image (51) du service de carte (50) et éventuellement dans les images de caméra (12) et/ou les données d'environnement (22).

4. Procédé selon l'une des revendications 1 à 3, **caractérisé en ce que** dans la détermination de la position du véhicule, une comparaison des images de caméra (12) de l'environnement du véhicule (1) avec le service de carte (50) basé sur données d'image est réalisée.

5. Procédé selon l'une des revendications 1 à 4, **caractérisé en ce que** dans la détermination de la position du véhicule, des données d'un système de navigation (42) soutenu par radio et/ou soutenu par satellite sont prises en compte.

6. Procédé selon l'une des revendications 1 à 5, **caractérisé en ce que** la position du véhicule ainsi que les images de caméra (12) et/ou les données d'environnement (22) sont comparées aux données d'image (51) du service de carte (50) et **en ce que** lorsque des modifications sont détectées, les données d'image du service de carte (50) sont mises à jour.

7. Procédé selon la revendication 6, **caractérisé en ce que** les données d'image (51) du service de carte (50) ne sont mises à jour que si les modifications détectées par comparaison ont été détectées au moins deux fois.

8. Procédé selon l'une des revendications 1 à 7, **caractérisé en ce qu'**à partir des données d'image (51) du service de carte (50) et éventuellement des images de caméra (12) et des données d'environnement (22) ainsi que des informations obtenues dans celles-ci, une image est établie et est présentée au conducteur, la représentation de l'image étant réalisée de préférence sous la forme d'une vue à vol d'oiseau ou d'une vue en trois dimensions, la présentation contenant de préférence des informations concernant des emplacements de stationnement (35, 36, 37) possibles dans l'environnement du véhicule (1).

9. Procédé selon la revendication 8, **caractérisé en ce que** la représentation imagée peut être agrandie ou diminuée et **en ce qu'**en cas de diminution de la présentation imagée, une transition continue s'effectue sur une présentation formée exclusivement des données d'image (51) du service de carte (50).

10. Programme informatique en vue de l'exécution du procédé selon l'une des revendications 1 à 9 lorsque le programme informatique est exécuté sur un dispositif informatique programmable.

11. Ensemble conçu pour mettre en oeuvre le procédé selon l'une des revendications 1 à 9, et comprenant un appareil de commande (40), au moins une caméra (11) et éventuellement d'autres capteurs d'environnement (21), par exemple un capteur à ultrasons, un capteur lidar ou un capteur radar, en vue de la détection de l'environnement du véhicule (1), l'appareil de commande (40) disposant d'une liaison à un service de carte (50) basé sur données d'image.
